(19) Europäisches Patentamt European Patent Office Office européen des brevets

(11) **EP 4 296 893 B1**

(12) **FASCICULE DE BREVET EUROPEEN**

(45) Date de publication et mention de la délivrance du brevet:
**13.05.2026 Bulletin 2026/20**

(21) Numéro de dépôt: **23179627.7**

(22) Date de dépôt: **15.06.2023**

(51) Classification Internationale des Brevets (IPC):
**G06K 19/067** (2006.01) **G06K 19/077** (2006.01)

(52) Classification Coopérative des Brevets (CPC):
**G06K 19/0672; G06K 19/07718**

(54) **BANDE D'ÉTIQUETTES D'IDENTIFICATION PAR FRÉQUENCE RADIO (" RFID ") SANS PUCE**

CHIPLOSES RFID-ETIKETTENBAND

CHIPLESS RFID TAG TAPE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.06.2022 FR 2206262**

(43) Date de publication de la demande:
**27.12.2023 Bulletin 2023/52**

(73) Titulaire: **Idyllic Technology**
**26000 Valence (FR)**

(72) Inventeur: **GAUTIER LE BOULCH, Louis**
**92190 Meudon (FR)**

(74) Mandataire: **De Kezel, Eric et al**
**Mathisen & Macara LLP**
**Charta House**
**30-38 Church Street**
**Staines-upon-Thames, Middlesex TW18 4EP**
**(GB)**

(56) Documents cités:
**WO-A1-2021/165422     US-A1- 2006 289 979**
**ZA-B- 200 607 984**

**Description**

La présente invention concerne une bande d'étiquettes RFID sans puce (personnalisée), aussi appelée bande de « chip-less RFID tag ». La présente invention concerne plus particulièrement une bobine de bande d'étiquettes RFID sans puce (personnalisée). La présente invention concerne également un procédé de préparation de bande d'étiquettes RFID sans puce (personnalisée) et de sa bobine correspondante.

Ces étiquettes seront avantageusement incluses dans des dispositifs d'identification par fréquence radio (dénommé « RFID », avec « RF » désignant fréquence radio) sans puce (personnalisé) ; par « dispositif » il faut comprendre un emballage, un document, notamment un document de sécurité ainsi qu'éventuellement tout objet comprenant une portion de la bande comprenant au moins une étiquette RFID sans puce.

Les systèmes de transmission de données utilisant la technologie d'identification par fréquence radio sont couramment utilisés pour identifier tous types d'objets et d'êtres vivants (par exemple un animal ou un humain) porteurs d'un dispositif (étiquette) adapté. La technologie RFID est devenue au cours des dernières décennies de plus en plus répandue en tant que dispositif de stockage et de transmission d'informations.

Cette technologie RFID utilise une radio-étiquette, également dénommée transpondeur (de l'anglais « transponder », par contraction des mots « transmitter » et « responder »), qui est placée sur un objet, et un lecteur, également dénommé interrogateur, pour lire et identifier la radio-étiquette. Les technologies RFID sont généralement classées en catégories utilisant des radio-étiquettes « actives » ou « passives ». Les radio-étiquettes actives disposent d'une source d'énergie locale (telle qu'une batterie) grâce à laquelle elles envoient un signal au lecteur ; elles sont ainsi généralement caractérisées par une portée de signal émis relativement longue. En revanche, les radio-étiquettes passives ne disposent pas de source d'alimentation interne car leur énergie d'émission de signal provient du lecteur lui-même, et en particulier de la réception du signal émis par le lecteur ; ainsi, les radio-étiquettes passives ont une portée de signal beaucoup plus faible, en générale inférieure à 8 mètres.

D'un point de vue pratique, la technologie RFID utilise des fréquences radio (« RF ») qui ont des caractéristiques de pénétration du matériau beaucoup plus élevées que les signaux optiques. Ainsi, en comparaison avec les étiquettes codes à barres, la technologie RFID permettra une utilisation dans des conditions environnementales bien plus hostiles ; par exemple, les étiquettes RFID peuvent être lues à travers toute sorte de matière telle que le papier, le carton, le bois, la peinture, l'eau, la saleté, la poussière, le corps animal ou humain, le béton ou encore à travers l'article étiqueté lui-même ou son emballage. Ceci a ouvert aux étiquettes RFID une large gamme d'applications parmi lesquelles nous citerons à titre illustratif, l'identification des biens et des personnes, en particulier des emballages, des voitures (parking, péages, ...), la gestion des inventaires, les cartes d'accès électroniques, sans oublier tous les documents de sécurité tels que par exemple un moyen de paiement, tel qu'un billet de banque, un chèque ou un ticket restaurant, un document d'identité, tel qu'une carte d'identité, un visa, un passeport ou un permis de conduire, un ticket de loterie, un titre de transport ou encore un ticket d'entrée à des manifestations culturelles ou sportives.

Il existe principalement deux types d'étiquettes RFID, les étiquettes comprenant un circuit électronique intégré, dites étiquettes à puce (électronique), et les étiquettes ne comprenant pas de circuit électronique intégré, généralement désignées dans la technique par les termes anglais « chip-less RFID tags » - étiquettes RFID sans puce.

Les étiquettes RFID à puce (actives ou passives) comprennent généralement une antenne, un circuit électronique, une mémoire pour stocker un code d'identification. Le circuit électronique permet notamment de recevoir le signal émis par la borne de lecture et d'émettre en réponse, dans une bande de fréquences déterminée, un signal modulé contenant le code d'identification stocké dans la mémoire. Pour les étiquettes RFID à puce passives, une partie de l'énergie portée par les ondes radio émises par la borne de lecture sert à alimenter électriquement la puce.

Du fait de la présence de circuits électroniques (comme la puce RFID ou la partie antenne) dans les étiquettes RFID à puce, ces étiquettes ont un coût de revient non négligeable. C'est notamment pour réduire ce coût de revient qu'on a proposé de réaliser des étiquettes sans puce et sans antenne. Ce type d'étiquette RFID sans puce ne nécessite donc ni circuit intégré, ni composants électroniques discrets, tels que par exemple un transistor et/ou une bobine et/ou une capacité et/ou une antenne; c'est leur caractéristique géométrique conductrice qui engendre un comportement spécifique, notamment de type résonateur. Cette caractéristique de résonance à fréquence donnée permet d'imprimer des étiquettes RFID sans puce directement sur un objet à des coûts inférieurs à ceux des étiquettes RFID traditionnelles.

Parmi les différentes familles d'étiquette sans puce, on peut les différencier par rapport à la présence ou non d'une antenne RF au niveau du tag. De manière classique, à l'image des systèmes RF, cette antenne a pour rôle de récupéré une partie de l'onde EM émise du lecteur, de la convertir en onde guidée au niveau de l'étiquette pour qu'elle soit conduite à travers un filtre qui va donner le code du tag. Ce signal filtré et donc comportant l'identifiant (« ID ») va être réémis en direction du lecteur, le plus souvent avec une seconde antenne qui joue le même rôle que la première mais en effectuant le processus inverse. Ces étiquettes RFID ont été utilisées principalement pour faire une preuve de concept du chipless, toutefois en terme applicatif elles sont très limitées. Les antennes sont encombrantes et conduisent à augmenter significativement la dimension de l'étiquette. De même l'antenne est généralement très sensible à son environnement proche, ceci peut la désadapter complétement ce qui fait qu'elle ne sera plus en mesure de convertir l'onde rayonnée en onde guidé pour alimenter le filtre. Ceci se traduit par une perte d'efficacité du tag, notamment une diminution significative de la distance de lecture lorsque ces tags avec antenne sont positionnés sur des objets. Pour remédier à ces problèmes, des tags RFID chipless sans antenne, toujours basés sur le même principe de codage de l'information, sont apparus dans les années 2010, à titre illustratif dans les publications suivantes

- E. Perret, S. Tedjini, V. Deepu, A. Vena, F. Garet and L. Duvillaret, Brevets d'invention publiés avec les numéros FR2956232 (B1) et US8556184 (B2) ; et
- VENA, Arnaud, PERRET, Etienne, et TEDJINI, Smail. Chipless RFID based on RF encoding particle: realization, coding and reading system. Elsevier, 1st Edition - August 2, 2016.

La grande différence avec les tags objets de la présente invention parfois nommés REP (pour « RF encoding particle ») est liée au fait qu'ils ne font pas intervenir différent blocs RF à savoir une partie antenne, une partie ligne de transmission RF, une partie filtre, mais simplement des motifs RF résonants qui permettent de coder l'identifiant sur la base des fréquences de résonnances qu'ils contiennent. Ces tags sont des cibles radar artificielles conçues pour raisonner à des fréquences spécifiques et qui sont compatibles avec la possibilité d'encoder un ID mais également de retrouver l'ID du tag à partir de l'acquisition de signal rétrodiffusé par l'étiquette.

L'augmentation de la capacité de codage des étiquettes d'identification par fréquence radio sans puce ainsi que la fabrication de ces étiquettes et, en particulier, la fabrication industrielle d'étiquettes discriminantes constituent des challenges importants de l'état de la technique. Bien que la technologie RFID sans puce soit promise à un bel avenir, il n'en demeure pas moins que l'on recherche toujours à améliorer les performances de lecture des tags RFID sans puce. Par performance de lecture on entend la capacité du tag à être lu et identifié soit, par exemple, l'augmentation du niveau signal du tag (signal utile porteur de l'information du tag) par rapports aux autres signaux comme le bruit de mesure ou encore les signaux rétrodiffusés par d'autres objets proches du tag. Un travail spécifique sur le tag lui-même et notamment les matériaux le composant est essentiel pour répondre à la problématique des performances de lecture ainsi que de fabrication et de coût de ces étiquettes. Les matériaux utilisés pour la constitution des tags vont en effet avoir un impact direct sur le signal utile rétrodiffusé par le tag.

La demanderesse a ainsi développé des étiquettes RFID sans puce multicouches répondant entre autres aux problématiques de capacité de codage et de performances de lecture. Nous citerons à titre illustratif les étiquettes RFID sans puce décrites et revendiquées dans la demande de brevet WO2021/165422 A1 qui concerne un dispositif d'identification radiofréquence sans puce (personnalisée) et une étiquette correspondante.

ZA200607984 (A) décrit un procédé d'application d'une étiquette RFID sur un objet, ladite étiquette comprenant une antenne connectée à un circuit intégré incluant un récepteur et un émetteur. US2006289979 (A1) concerne des ponts de modules pour étiquettes intelligentes destinés à positionner des modules à puce sur des supports et à relier par pont des éléments de connexion des modules à puce à des éléments de connexion d'éléments d'antenne disposés sur ou dans les supports.

Il n'en demeure que leur processus de fabrication et, plus particulièrement de leur fabrication industrielle, reste un challenge important auquel la présente invention répond de manière avantageuse comme expliqué dans la suite de la présente description.

Exposé de l'invention

Ainsi, la présente invention apporte une solution prometteuse à cette problématique en proposant une bande d'étiquettes RFID sans puce (personnalisée), aussi appelée bande de « chip-less RFID tag » et, en particulier, une bobine de bande d'étiquettes RFID sans puce (personnalisée). La présente invention concerne également un procédé de préparation de bande d'étiquettes RFID sans puce (personnalisée) et de sa bobine correspondante.

Bande

En particulier, la présente invention concerne une bande d'étiquettes d'identification par fréquence radio sans puce, ladite bande comprenant une couche de substrat diélectrique et des motifs constitués d'une couche de matière conductrice représentant les résonateurs d'étiquettes, caractérisée en ce que la bande a des dimensions de longueur L, de largeur 1 et d'épaisseur « Ep » et en ce qu'elle comprend des saignées de profondeur « Pr » de la bande et orientées dans la direction de la largeur de la bande.

Les dites saignées permettent ainsi d'intégrer avantageusement la bande objet de la présente invention dans un procédé industriel de rouleau à rouleau (également connu sous le nom de bobine bobine ou « roll-to-roll processing » en anglais) tout en apportant de nombreux autres avantages qui seront décrits dans la suite de la présente description.

**Saignées**

Les saignées pourront être effectuées par toute méthode appropriée, par exemple au moyen d'un outil de découpe de type coupe mi-chair. L'outil de découpe sera avantageusement positionné au sein du procédé industriel de préparation de la bande d'étiquettes d'identification par fréquence radio sans puce.

La bande d'étiquettes d'identification par fréquence radio sans puce selon la présente invention comprend donc des saignées de profondeur Pr et orientées dans la direction de la largeur de la bande ; ainsi, quand la bande est préparée ou transportée, les dites saignées sont effectuées perpendiculairement au sens de déplacement de ladite bande. La profondeur Pr des saignées sera avantageusement sélectionnée de manière à permettre l'enroulement de la bande pour former une bobine sans risquer de déchirer la bande et sans affecter l'intégrité et les caractéristiques des motifs constitués d'une couche de matière conductrice représentant les résonateurs d'étiquettes. A titre illustratif, la profondeur des saignées sera telle que Pr>1% de l'épaisseur Ep de la bande, par exemple Pr>5% de l'épaisseur Ep de la bande. La profondeur Pr des saignées sera avantageusement telle que Pr<90% de l'épaisseur Ep de la bande, par exemple Pr<50% de l'épaisseur Ep de la bande. L'enroulement de la bande sera ainsi avantageusement effectué du côté de la bande où la couche de substrat diélectrique n'aura pas été saignée.

La longueur des saignées sera aussi avantageusement sélectionnée de manière à permettre l'enroulement de la bande pour former une bobine sans risquer de déchirer la bande et sans affecter l'intégrité et les caractéristiques des motifs constitués d'une couche de matière conductrice représentant les résonateurs d'étiquettes. A titre illustratif, la longueur des saignées sera supérieure à 80% de la largeur l de la bande, par exemple supérieure à 90% de la largeur l de la bande, de préférence identique à la largeur l de la bande.

La largeur des saignées sera également avantageusement sélectionnée de manière à permettre l'enroulement de la bande pour former une bobine sans risquer de déchirer la bande et sans affecter l'intégrité et les caractéristiques des motifs constitués d'une couche de matière conductrice représentant les résonateurs d'étiquettes. Cette largeur sera avantageusement la plus petite possible ; elle dépendra donc de l'appareillage utilisé pour la génération desdites saignées. A titre illustratif, la largeur des saignées sera inférieure à 0,5 mm, par exemple inférieure à 0,1 mm. Toutefois, et ceci constitue un mode d'application particulier selon la présente invention, la forme des saignées pourra avantageusement avoir une forme en V car cette forme ouvre d'autres possibilités d'enroulement de la bande comme expliqué ci-dessous dans la description.

Toute méthode de mesure appropriée pourra avantageusement être utilisée pour la mesure des dimensions des saignées. A titre illustratif, nous citerons l'utilisation de profilomètre et/ou d'ultrasons et/ou de microscope. De manière alternative, il suffira de remonter à l'outil de découpe et aux conditions dans lesquelles les saignées ont été effectuées pour obtenir les dimensions correspondantes des saignées.

Le positionnement des saignées sur la bande sera également avantageusement sélectionné de manière à permettre l'enroulement de la bande pour former une bobine sans risquer de déchirer la bande et sans affecter l'intégrité et les caractéristiques des motifs constitués d'une couche de matière conductrice représentant les résonateurs d'étiquettes.

« Esp » est défini dans le présent exposé (ce compris la description et les revendications qui suivent) comme l'espacement entre deux saignées consécutives (les saignées orientées dans la direction de la largeur de la bande ; également appelées saignées principales ci-dessous).

Ainsi, dans un mode d'exécution particulier de la présente invention, lorsque la bande a été enroulée ou est destinée à être enroulée sur un élément support cylindrique central (par exemple un mandrin) dont le diamètre avant enroulement est « Dia », les espacements entre saignées consécutives « Esp » satisfont l'équation suivante :

$$((\text{Esp}/2)^2+(\text{Dia}/2)^2)^{1/2} - (\text{Dia}/2) < 2 \text{ mm}$$

De préférence,

$$((\text{Esp}/2)^2+(\text{Dia}/2)^2)^{1/2} - (\text{Dia}/2) < 1 \text{ mm}$$

Par exemple,

$$((\text{Esp}/2)^2+(\text{Dia}/2)^2)^{1/2} - (\text{Dia}/2) < 0,5 \text{ mm}$$

Ainsi, dans un mode d'exécution particulier de la présente invention, lorsque la bande a été enroulée ou est destinée à être enroulée sur un élément support cylindrique central (par exemple un mandrin) dont le diamètre avant enroulement est « Dia » et le diamètre variable pendant l'enroulement « Dréel », les espacements entre saignées consécutives « Esp » satisfont l'équation suivante :

$$((Esp/2)^2+(Dréel/2)^2)^{1/2} – (Dréel/2) < 2 \text{ mm}$$

De préférence,

$$((Esp/2)^2+(Dréel/2)^2)^{1/2} – (Dréel/2) < 1 \text{ mm}$$

Par exemple,

$$((Esp/2)^2+(Dréel/2)^2)^{1/2} – (Dréel/2) < 0,5 \text{ mm}$$

Dans un mode d'exécution selon la présente invention, les saignées sont disposées sur la face de la bande du côté des motifs constitués d'une couche de matière conductrice représentant les résonateurs d'étiquettes. Bien qu'on puisse positionner volontairement des saignées sur certains résonateurs de manière à en modifier les caractéristiques de résonance, cela demanderait un travail considérable de réidentification de l'étiquette qui s'éloignerait de tout procédé industriel efficace. Ainsi, les saignées seront avantageusement positionnées en dehors des résonateurs d'étiquettes afin de ne pas en modifier les caractéristiques de résonance, par exemple entre deux résonateurs successifs dans la direction de la longueur de la bande. Dans un mode d'exécution préféré selon la présente invention, les saignées seront positionnées en dehors des motifs constitués d'une couche de matière conductrice représentant les résonateurs d'étiquettes, soit entre deux étiquettes ou groupe d'étiquettes dans la direction de la longueur de la bande. Bien que les saignées puissent être positionnées à intervalles de distance irréguliers sur la bande, un positionnement à intervalle régulier sera privilégié de manière à faciliter le procédé de fabrication industrielle des bandes avec leurs saignées.

Dans un mode d'exécution selon la présente invention, les saignées sont disposées sur la face de la bande opposée au côté des motifs constitués d'une couche de matière conductrice représentant les résonateurs d'étiquettes. Les caractéristiques de positionnement de ces saignées répondront avantageusement aux mêmes exigences que si les saignées avaient été positionnées sur l'autre face, à savoir : une orientation dans la direction de la largeur de la bande (perpendiculairement au sens de déplacement de ladite bande lorsque cette dernière est préparée ou transportée) ; sur des portions de la bandes dont le positionnement dans la direction de la longueur L de la bande ne coïncide pas avec celui des résonateurs d'étiquettes afin de ne pas en modifier les caractéristiques de résonance, par exemple entre deux résonateurs successifs représentés par leur image virtuelle transversale (au travers de la bande) dans la direction de la longueur de la bande ; par exemple, en dehors des espaces correspondant à l'image virtuelle transversale (au travers de la bande) des motifs constitués d'une couche de matière conductrice représentant les résonateurs d'étiquettes, soit entre deux étiquettes ou groupe d'étiquettes dans la direction de la longueur de la bande. Bien que les saignées puissent être positionnées à intervalles de distance irréguliers sur la bande, un positionnement à intervalle régulier sera privilégié de manière à faciliter le procédé de fabrication industrielle des bandes avec leurs saignées. Comme décrit ci-dessus, une forme en V des saignées conviendra particulièrement bien à ce mode d'exécution de saignées disposées sur la face de la bande opposée au côté des motifs constitués d'une couche de matière conductrice car elle permettra un enroulement de la bande du côté des saignées.

Dans un mode d'exécution particulier selon la présente invention, des saignées telles que celles définies ci-dessus pourront avantageusement être disposées sur les deux faces de la bande ; dans ce cas de figure, on évitera avantageusement que le positionnement dans la direction de la longueur L de la bande des saignées situées d'un côté de la bande ne coïncide avec celui des saignées situées de l'autre côté de la bande afin d'éviter tout déchirement de ladite bande.

Dans un mode d'exécution particulier selon la présente invention, des saignées additionnelles différentes de celles définies ci-dessus pourront avantageusement être disposées sur la bande perpendiculairement aux saignées déjà caractérisées ci-dessus que nous nommerons « saignées principales » ; ces saignées additionnelles seront donc avantageusement disposées dans la direction de la longueur de la bande. Elles seront également positionnées et dimensionnées de manière à ne pas affecter l'intégrité et les caractéristiques des motifs constitués d'une couche de matière conductrice représentant les résonateurs d'étiquettes. Ainsi, les saignées additionnelles seront avantageusement positionnées en dehors des résonateurs d'étiquettes afin de ne pas en modifier les caractéristiques de résonance, par exemple entre deux résonateurs successifs dans la direction de la largeur de la bande et/ou en dehors des motifs constitués d'une couche de matière conductrice représentant les résonateurs d'étiquettes, soit entre deux étiquettes ou groupe d'étiquettes dans la direction de la largeur de la bande. Leurs profondeurs et largeurs et/ou leur forme seront de préférence définies de la même manière que le celles des saignées principales ; cependant, leurs longueurs seront plutôt sélectionnées en fonction des dimensions des étiquettes et/ou des résonateurs. Dans un mode d'exécution selon la présente invention, les saignées additionnelles sont disposées sur la face de la bande du côté des motifs constitués d'une couche de matière conductrice représentant les résonateurs d'étiquettes, sur la face opposée ou sur les deux faces de la bande.

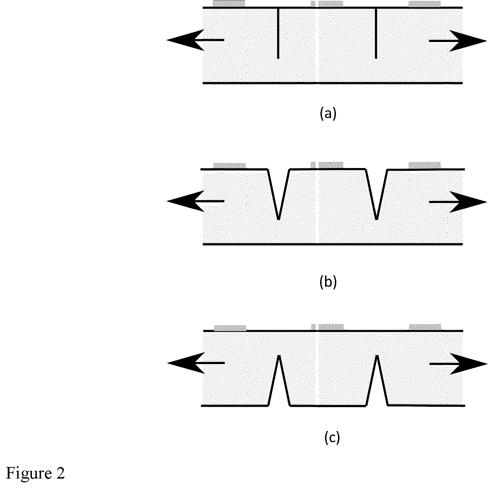

A titre d'illustration selon la figure 2 jointe, on peut voir 3 exemples de bande d'étiquettes d'identification par fréquence radio (« RFID ») sans puce, dans le sens de la longueur, comportant des saignées/entailles. Pour chaque exemple, on peut visualiser trois motifs conducteurs positionnés sur la bande. Les flèches symbolisent le sens de défilement de la bande, c'est-à-dire la possibilité d'enrouler les bandes pour les transformer en bobines.

La figure 2(a) présente une bande avec des saignées de largeur la plus petite possible. Comme précisé ci-dessus, cette largeur dépendra de l'appareillage utilisé pour la génération desdites saignées.

Les figures 2(b) et (c) présentent des saignées en forme en V, forme qui ouvre d'autres possibilités d'enroulement de la bande. En effet les saignées présentées sur la figure 2(b) permettent d'enrouler la bande de telle manière à ce que les motifs conducteurs se trouvent sur la face extérieure de l'enroulement, alors que la figure 2(c) où les formes en V sont sur la face opposée aux motifs permettent d'enrouler la bande de manière à ce que les motifs soient sur la face intérieure (coté mandrin) de la bobine lors de l'enroulage.

Bobine

La présente invention concerne également une bobine de bande d'étiquettes d'identification par fréquence radio sans puce, ladite bande comprenant une couche de substrat diélectrique et des motifs constitués d'une couche de matière conductrice représentant les résonateurs d'étiquettes, caractérisée en ce que la bande de la bobine a des dimensions de longueur L, de largeur 1 et d'épaisseur Ep et en ce qu'elle comprend des saignées de profondeur Pr de la bande et orientées dans la direction de la largeur de la bande.

Dans un mode d'exécution préféré selon la présente invention, toutes les caractéristiques de saignées susmentionnées s'appliqueront aussi avantageusement à la bande de la bobine objet de la présente invention.

C'est donc l'enroulement de la bande d'étiquettes d'identification par fréquence radio sans puce qui forme la bobine objet de la présente invention. Ladite bobine peut avantageusement aussi comprendre tout élément facilitant sa fabrication et/ou sa manutention et/ou son transport ; le poids de la bande représentant de préférence au moins 90% du poids total de la bobine.

Dans un mode d'exécution préféré, la bobine objet de la présente invention comprend un élément support cylindrique central autour duquel est enroulée ladite bande.

Tout type d'élément support cylindrique central pour enrouler la bande d'étiquettes d'identification par fréquence radio sans puce objet de la présente invention pourra avantageusement être utilisée dans le cadre de la présente invention pour autant que ses caractéristiques, en combinaison avec les caractéristiques dimensionnelles des bandes et des saignées susmentionnées, permette l'enroulement de la bande sur ledit élément sans risquer de déchirer la bande et sans affecter l'intégrité et les caractéristiques des motifs constitués d'une couche de matière conductrice représentant les résonateurs d'étiquettes.

A titre illustratif, l'élément support cylindrique central est un mandrin (par exemple en métal ou en carton) ; la présente invention couvre néanmoins aussi des bobines sans mandrins au même titre que certains rouleaux de papier toilette.

Pour rappel, « Esp » est défini comme l'espacement entre deux saignées consécutives (les saignées orientées dans la direction de la largeur de la bande ; également appelées saignées principales ci-dessus).

« Dia » est défini dans le présent exposé (la description et les revendications qui suivent) comme le diamètre de l'élément support cylindrique central (par exemple le mandrin) avant enroulement ; ce diamètre ne tient donc pas compte de l'épaisseur de bande enroulée sur ledit support. Dia est de préférence compris entre 25 mm et 305 mm.

« Dréel » est défini dans le présent exposé (la description et les revendications qui suivent) comme le diamètre de la bobine de bande d'étiquettes d'identification par fréquence radio sans puce ; ce diamètre est le diamètre de la somme de l'élément support cylindrique central (par exemple le mandrin) et de l'épaisseur de bande enroulée sur ledit élément support. Dréel évolue au fur et à mesure de l'enroulement de la bande. Dréel est de préférence compris entre 25 mm et 1250 mm, par exemple après enroulement entre 50 mm et 1000 mm. Le rapport entre le diamètre maximum de la bobine enroulée de la bande divisé par le diamètre de son mandrin est de préférence compris entre 2,5 et 20, par exemple entre 2,5 et 10, par exemple entre 2,5 et 4.

Afin de faciliter les calculs et la compréhension des dimensions discutées dans la présente invention, et sauf indication contraire, les dimensions sont systématiquement représentées en millimètre (mm).

Dans un mode d'exécution particulier selon la présente invention, les espacements entre saignées consécutives « Esp » satisfont l'équation suivante :

$$((Esp/2)^2 + (Dia/2)^2)^{1/2} - (Dia/2) < 2 \text{ mm}$$

De préférence,

$$((\text{Esp}/2)^2+(\text{Dia}/2)^2)^{1/2} - (\text{Dia}/2) < 1 \text{ mm}$$

Par exemple,

$$((\text{Esp}/2)^2+(\text{Dia}/2)^2)^{1/2} - (\text{Dia}/2) < 0,5 \text{ mm}$$

Dans un mode d'exécution particulier selon la présente invention, mode qui tient compte de l'augmentation du diamètre réel de la bobine au fur et à mesure de l'enroulement engendrant une possibilité d'augmentation graduelle de l'espacement entre saignées, les espacements entre saignées consécutives « Esp » satisfont l'équation suivante :

$$((\text{Esp}/2)^2+(\text{Dréel}/2)^2)^{1/2} - (\text{Dréel}/2) < 2 \text{ mm}$$

De préférence,

$$((\text{Esp}/2)^2+(\text{Dréel}/2)^2)^{1/2} - (\text{Dréel}/2) < 1 \text{ mm}$$

Par exemple,

$$((\text{Esp}/2)^2+(\text{Dréel}/2)^2)^{1/2} - (\text{Dréel}/2) < 0,5 \text{ mm}$$

« Ec » est défini dans le présent exposé (la description et les revendications qui suivent) comme l'écart en tout point d'enroulement de la bande entre la surface inférieure de la bande et son support d'enroulement (l'élément support) lors du premier tour d'enroulement ; « EcMAX » étant l'écart le plus grand. Bien que l'objectif de l'invention, avec ses saignées, soit de se rapprocher d'un enroulement parfait qui épouse la circonférence du mandrin, il est légitime d'accepter un écart EcMAX qui soit supérieur à 0,01 mm, par exemple supérieur à 0,1 mm.

Préparation des bandes et des bobines de bande

La présente invention concerne également un procédé de préparation de la bande d'étiquettes RFID sans puce (personnalisée) et de sa bobine correspondante. Tout procédé rouleau à rouleau (ou bobine bobine) de l'art antérieur (« roll to roll » en langue anglaise) pourra avantageusement être utilisé dans le cadre de la présente invention pour autant qu'il intègre les exigences liées aux dimensions des bobines et des saignées susmentionnées. Le procédé de préparation de la bande d'étiquettes d'identification par fréquence radio sans puce et/ou de sa bobine correspondante selon la présente invention utilisera avantageusement un procédé rouleau à rouleau qui intègre un poste de découpe permettant de réaliser les saignées.

La demanderesse a constaté que la présente invention permettait de maintenir de manière reproductible les capacités de codage et de performances de lecture des étiquettes ainsi fabriquées en bande/bobine avec leurs saignées alors que ce n'était pas possible lorsque les saignées n'étaient pas effectuées conformément à la présente invention. Sans vouloir être restreint par cette explication, la demanderesse pense que le maintien de capacités de codage et de performances de lecture a été rendu possible grâce à un contrôle amélioré de la courbure de la bande aux endroits critiques, à savoir aux endroits proches des étiquettes et de leurs résonateurs. Ainsi, on préfèrera maintenir une distance minimale entre les saignées et n'importe quel résonateur ; à titre illustratif toute saignée sera distante de plus de 1 mm, voire de plus de 2 mm de tout résonateur et/ou motif de résonateurs.

Dans un mode d'exécution préféré selon la présente invention, toutes les caractéristiques mentionnées ci-après s'appliqueront aussi avantageusement non seulement à la bande objet de la présente invention mais également à la bande de la bobine objet de la présente invention.

A titre illustratif, la couche de substrat diélectrique de la bande d'étiquettes d'identification par fréquence radio sans puce objet de la présente invention pourra être sélectionnée parmi la mousse solide, le carton mousse, le carton ondulé, le carton alvéolaire ou en tissu (par exemple un matériau constitué de fils ou de fibres entrelacés en coton, chanvre, lin ou synthétiques tels le nylon, le polyamide ou la viscose).

Comme décrit plus en détail dans la description qui suit, on entend de préférence par mousse solide un matériau diélectrique pouvant être rigide, ou flexible, qui contient un pourcentage important de bulles d'air ou de gaz et qui donc, tout en occupant un certain volume, ne contient que très peu de matière à l'état solide, l'état solide étant de préférence un état de la matière caractérisé par l'absence de liberté entre les molécules ou les ions ; ainsi, une mousse est généralement caractérisée par une permittivité relative très faible, à savoir proche de 1, 1 étant la valeur de la permittivité de l'air.

Cet ensemble substrat diélectrique et motif conducteur conforme à la présente invention permet d'obtenir des étiquettes qui présentent non seulement des caractéristiques de résonance optimales tout en présentant une efficacité de rayonnement supérieure et également une performance de lecture supérieure ; ainsi, c'est bien au moins la somme des deux couches, diélectrique et motif conducteur, qui définissent les caractéristiques de résonance des étiquettes de la bande et de la bobine objets de la présente invention. Ceci rend possible d'identifier facilement les étiquettes RFID sans puce correspondantes (leur signature RF restant reconnaissable) tout en facilitant leur fabrication.

Dans le cadre de la présente invention, l'utilisation du qualificatif « personnalisé » pour les étiquettes vient simplement confirmer que l'identification/discrimination de ladite étiquette est possible.

Substrat diélectrique

Les bandes d'étiquettes d'identification par fréquence radio sans puce selon la présente invention sont donc caractérisées en ce qu'elles comprennent une couche de substrat diélectrique.

Ce substrat diélectrique sera avantageusement sélectionné parmi les substrats diélectriques répondant à au moins une, deux ou les trois propriétés suivantes:

- une masse volumique apparente inférieure à 250 kg.m$^{-3}$ ; par exemple inférieure à 100 kg.m$^{-3}$ ; et/ou
- une permittivité relative inférieure à 3 ; de préférence inférieure à 2 ; de préférence inférieure à 1,25. Par exemple, cette permittivité relative sera inférieure à 1,10. Dans un mode d'exécution particulier selon la présente invention, cette permittivité relative sera proche de 1. Cette permittivité relative sera de préférence supérieure à 1,001. Par exemple, cette permittivité relative sera supérieure à 1,01 ; et/ou
- une valeur de tangente d'angle de perte inférieure à 10$^{-2}$, de préférence inférieure à 10$^{-3}$, par exemple inférieure à 2.10$^{-4}$.

On citera à titre illustratif un substrat diélectrique ayant une masse volumique apparente comprise entre 25 et 75 kg.m$^{-3}$ ; une permittivité relative comprise entre 1,05 et 1,09 ; et une valeur de tangente d'angle de perte tan $\delta$ comprise entre 10$^{-5}$ et 2.10$^{-4}$ à une fréquence de 3.9 GHz.

Ce substrat diélectrique particulier sera avantageusement sélectionné parmi les substrats diélectriques en mousse solide, en carton mousse, en carton ondulé, en carton alvéolaire ou en tissu (par exemple en un matériau constitué de fils ou de fibres entrelacés en coton, chanvre, lin ou synthétiques tels le nylon, le polyamide ou la viscose).

Ce substrat diélectrique sera avantageusement rigide ou flexible ; il se présentera de préférence sous la forme d'un film.

L'épaisseur du substrat diélectrique sera avantageusement supérieure à 0,1 mm. Cette épaisseur sera de préférence supérieure à 0,5 mm. Cette épaisseur sera par exemple supérieure à 0,75 mm.

L'épaisseur du substrat diélectrique sera avantageusement inférieure à 10 mm, par exemple égale ou inférieure à 5 mm. Cette épaisseur sera de préférence inférieure à 3 mm. Cette épaisseur sera par exemple inférieure à 1,5 mm.

Tout substrat diélectrique répondant aux objectifs de performances de lecture et de résonance et de discrimination selon la présente invention pourra avantageusement être utilisée dans le cadre de la présente invention. On citera à titre illustratif le tissu (par exemple en un matériau constitué de fils ou de fibres entrelacés en coton, chanvre, lin ou synthétiques tels le nylon, le polyamide ou la viscose), le carton ondulé, le carton alvéolaire, le carton mousse, la mousse solide, par exemple les polymères ou biopolymères.

Dans un mode d'exécution particulier selon la présente invention, le substrat diélectrique est caractérisé par sa masse volumique apparente qui est inférieure à 250 kg.m$^{-3}$ ; par exemple inférieure à 100 kg.m$^{-3}$. La masse volumique apparente peut être mesurée par toute méthode appropriée, par exemple par pesage. Sauf indications contraires, les masses volumiques sont données pour des corps à la température de 20 °C, sous la pression atmosphérique normale (1 013 hPa). On pourra aussi avantageusement utiliser toute méthode ASTM ou ISO applicable au type de matériau sélectionné comme substrat diélectrique pour la mesure de cette masse volumique apparente ; quelle que soit la méthode ASTM ou ISO choisie (et applicable au type de matériau sélectionné), la mesure de la masse volumique apparente sera donc de préférence inférieure à 250 kg.m$^{-3}$ ; par exemple inférieure à 100 kg.m$^{-3}$.

Dans un mode d'exécution particulier selon la présente invention, le substrat diélectrique est caractérisé par ses propriétés diélectriques, à savoir une permittivité relative inférieure à 3, de préférence inférieure à 2. Cette permittivité relative sera de préférence inférieure à 1,25. Par exemple, cette permittivité relative sera inférieure à 1,10. Dans un mode d'exécution particulier selon la présente invention, cette permittivité relative sera proche de 1. Cette permittivité relative sera de préférence supérieure à 1,001. Par exemple, cette permittivité relative sera supérieure à 1,01.

Dans un mode d'exécution particulier selon la présente invention, le substrat diélectrique est caractérisé par ses propriétés diélectriques, à savoir une valeur de tangente d'angle de perte inférieure à 10$^{-2}$, de préférence inférieure à 10$^{-3}$, par exemple inférieure à 2.10$^{-4}$.

Pour rappel, la permittivité diélectrique est une propriété physique qui décrit la réponse d'un matériau lorsqu'on lui applique un champ électrique ; et la tangente de l'angle de perte est également appelé facteur de dissipation diélectrique.

Les permittivité relative et tangente d'angle de perte (« tan δ ») peuvent être mesurés par toute méthode appropriée. Nous citerons à titre illustratif l'utilisation de la spectroscopie diélectrique ou de cavités résonnantes qui sont des techniques d'analyse diélectrique généralement utilisées. Ces techniques sont basées sur la mesure de l'impédance complexe d'un échantillon à une fréquence donnée voire à une température elle aussi donnée. La présente invention concerne des applications pour des températures autour de la température ambiante (typiquement entre -20°C et +80°C), dans cette plage de température, la permittivité ainsi que les pertes diélectriques des matériaux diélectriques communément présents autour de nous peuvent être considérées comme relativement constantes notamment dans la bande d'intérêt qui est la bande ULB entre 3GHz et 10 GHz.

Cette méthode permet d'avoir accès à la valeur de la permittivité d'un matériau ou encore à son facteur de perte tan δ à une fréquence donnée par exemple. Les valeurs indiquées dans le présent exposé (la présente description et les revendications qui suivent) correspondent à celles mesurées à toute fréquence comprise dans la bande de fréquences de 3 GHz à 10 GHz, à une température de 20°C.

En particulier, les valeurs indiquées dans les exemples qui suivent ont été mesurées au moyen du modèle 08 de Damaskos (« Thin Sheet Tester - Cavity ») qui permet d'obtenir une excellente estimation de la permittivité diélectrique des substrats diélectriques; ce testeur de feuille mince Damaskos donne également la mesure de la tangente de perte du diélectrique sur la bande de 800-4000 MHz de manière non destructive ce qui convient particulièrement bien à nos substrats. La mesure est réalisée sur des analyseurs vectoriels et scalaires communs sous contrôle de l'équipement Damaskos et le traitement des données du logiciel « Cavity » vendu par la société Damaskos ce qui offre une très bonne répétabilité.

**Mousse solide**

La mousse solide (par exemple la mousse en polymère), est une mousse solide utilisée à titre illustratif dans de nombreuses applications telles que l'isolation thermique, l'isolation acoustique, les emballages, l'automobile, etc. Cette mousse peut être assimilée à un réseau continu solide comprenant des bulles de gaz (en général d'air) piégées ce qui permet de combiner les propriétés d'une mousse (densité, légèreté) avec celle d'un solide.

La mousse solide peut avantageusement être caractérisée par sa nature, sa densité, sa structure à cellules fermées ou ouvertes, la taille de ses bulles et l'arrangement desdites bulles dans l'espace.

Une mousse solide est dite de faible densité quand elle contient plus de 90% de gaz, ce qui correspond à une masse volumique apparente inférieure à 100 kg.m$^{-3}$. Une mousse de densité moyenne a une masse volumique apparente comprise entre 100 et 600 kg.m$^{-3}$. Enfin, une mousse solide de densité élevée contient moins de 60% de gaz, ce qui correspond à une masse volumique apparente supérieure à 600 kg.m$^{-3}$. La masse volumique apparente peut être mesurée par toute méthode appropriée, par exemple par pesage. Sauf indications contraires, les masses volumiques sont données pour des corps à la température de 20 °C, sous la pression atmosphérique normale (1 013 hPa).

La mousse solide utilisée dans le cadre de la présente invention aura de préférence une masse volumique apparente inférieure à 250 kg.m$^{-3}$. Elle aura par exemple une masse volumique apparente inférieure à 100 kg.m$^{-3}$.

La mousse solide utilisée dans le cadre de la présente invention aura de préférence une densité de bulles comprise entre 10$^4$ et 10$^9$ bulles/cm$^3$. Elle aura par exemple une densité de bulles comprise 10$^5$ et 10$^8$ bulles/cm$^3$.

La mousse solide utilisée dans le cadre de la présente invention aura de préférence une taille des bulles dont le diamètre moyen est compris entre 5 microns et 1 millimètre. Elle aura par exemple un diamètre moyen compris entre 20 microns et 200 microns.

Toute matière présentant les caractéristiques de mousse définies dans le cadre de la présente invention pourra avantageusement être sélectionnée. Nous citerons à titre illustratif le carton mousse, les polymères ou biopolymères. Par polymère on comprend en général un ensemble constitué de plusieurs macromolécules (molécule constituée de la répétition de nombreuses sous-unités) ; en générale, lorsque la masse molaire du matériau est supérieure à 2 000 g/mole on parle de polymère.

Dans un mode d'exécution particulier selon la présente invention, la mousse solide sera une mousse en polymère, par exemple un polymère sélectionné parmi les thermodurcissables tels que les polyuréthanes, époxydes,... ou, de préférence, parmi les thermoplastiques tels que les polystyrène, chlorure de polyvinyle, polypropylène, polyéthylène, polyéthylène téréphtalate (PET) et/ou un mélange d'un ou plusieurs de ces polymères cités. Une mousse comprenant plus de 80% en poids, par exemple plus de 90% en poids, de polystyrène extrudé, de polyéthylène (PE) ou de polyéthylène téréphtalate (PET) sera avantageusement sélectionnée dans le cadre de la présente invention.

La morphologie des mousses, en particulier la taille des bulles et la densité de bulles, pourra être déterminée par toute méthode appropriée. A titre illustratif, la mousse (par exemple la mousse de polymère) est fracturée sous azote liquide afin de se positionner en-dessous de la température de transition vitreuse du polymère ; comme la surface de fracture est nette, les bulles ne sont pas déformées et peuvent être observées par exemple par microscopie. On utilisera de préférence un microscope électronique couplé à un logiciel d'analyse d'image capable de compter le nombre de bulles ;

et aussi de calculer l'aire moyenne des bulles pour chaque image, ce qui permet de déterminer le diamètre moyen des bulles, et le diamètre moyen équivalent lorsque les bulles ne sont pas sphériques - la densité de bulles (le nombre de bulles par $cm^3$) est déterminée par la formule $(n/A)^{(3/2)}$ avec n étant le nombre de bulles dans l'image et A l'aire de l'image.

La mousse de polymère peut être préparée par toute méthode appropriée. Nous citerons à titre illustratif le moussage physique avec injection de gaz (par exemple du $CO_2$ ou du diazote ($N_2$)) ou le moussage chimique avec ajout et décomposition d'un agent gonflant (par exemple le 5-Phenyltetrazole, le p-Toluene sulfonyl semicarbazide, le Dinitrospoenta-methylenetetramine, le p-Toluene sulfonyl hydrazide, le p.p-Oxybis(benzene)sulfonyl hydrazide et/ou l'Azodicabonamide qui est préférentiellement utilisé).

Un procédé d'extrusion soufflage est particulièrement adapté à la préparation d'un film de mousse de polymère pouvant être utilisé dans le cadre de la présente invention, en particulier un film de mousse de polystyrène sous forme de rouleaux avec adhésif ou sans.

Des agents de nucléation peuvent avantageusement être ajoutés au polymère ce qui permet d'obtenir des bulles de petites tailles. On citera à titre illustratif des charges inorganiques (par exemple les acides stéariques, le stéarate de calcium, le stéarate de zinc, le carbonate de calcium, le silicate de magnésium, le talc, le benzoate de sodium, des phases organiques telles que des élastomères et/ou des particules de caoutchouc, du noir de carbone, et/ou des nanoparticules telles que par exemple des nano argiles ou des nanoparticules de carbone (par exemple des nanotubes).

Dans un mode d'exécution particulier selon la présente invention, la mousse solide sera sélectionnée parmi les cartons mousse, également appelés cartons plume ; ce type de matériau se compose en général de deux ou trois couches dont une couche (interne si trois couches) principale de mousse de polymère (par exemple du polystyrène, du polyuréthane, du polyéthylène et/ou du polyéthylène téréphtalate (PET)) revêtue à l'extérieur d'une fine pellicule, par exemple du papier ou du plastique. Le type de papier ou de plastique représentant la couche supérieure optionnelle du substrat diélectrique n'est pas critique car elle représente une épaisseur infime par rapport à celle de la mousse solide comme expliqué en détail ci-dessous. Par contre, cet empilement de couches diélectriques rend l'invention encore plus pertinente car elle exacerbe les problèmes liés à la rigidité de cet empilement (ou sandwich en fonction du nombre de couches).

De manière générale, et dans un mode d'exécution particulier selon la présente invention, le substrat diélectrique (par exemple la mousse solide, le carton mousse, le carton ondulé, le carton alvéolaire et/ou le tissu, de préférence la mousse solide) avec ses caractéristiques telles qu'ici décrites représente au moins 95% en volume et/ou 95% en épaisseur et/ou 95% en poids de l'entièreté du substrat diélectrique de la bande objet de la présente invention, de préférence au moins 99% en volume et/ou 99% en épaisseur et/ou 99% en poids de l'entièreté du substrat diélectrique. La présente invention concerne donc également une bande d'étiquettes RFID sans puce comprenant (voir consistant en) un substrat diélectrique qui est lui-même constitué d'un substrat diélectrique avec ses caractéristiques telles qu'ici décrites ci-dessus (et/ou revendiquées) et d'une ou plusieurs fines couches diélectriques, par exemple une fine couche diélectrique sur laquelle est(sont) apposé(s) le(s) motif(s) constitué(s) d'une couche de matière conductrice ; cette(ces) fine(s) couche(s) diélectrique(s) (par exemple une pellicule de papier ou de carton ou de matière plastique (par exemple : une pellicule de polyéthylène (PE), de polypropylène (PP) ou de préférence de polyéthylène téréphtalate (PET)) représente donc avantageusement moins de 5%, voire moins de 1% de l'épaisseur de l'entièreté du substrat diélectrique.

Bien qu'à priori optionnelle et non critique, la Demanderesse a constaté que cette fine couche diélectrique ou pellicule diélectrique apportait de nombreux avantages additionnels à l'étiquette RFID objet de la présente invention moyennant quelques exigences préférées.

Tout d'abord, il est important de mentionner que les valeurs de permittivité relative et de tangente d'angle de perte « relatives » de l'empilement diélectrique correspondant de la bande d'étiquettes objet de la présente invention auront toujours des valeurs répondant aux valeurs caractéristiques déjà citées ci-dessus (et/ou revendiquées ci-après) ; l'influence de la pellicule diélectrique additionnelle (ou des pellicules additionnelles) sur l'ensemble diélectrique sera donc insignifiante par rapport à ces critères.

Ensuite, et ceci représente un avantage considérable d'un mode de réalisation selon la présente invention, la Demanderesse a constaté que la planéité et/ou l'état de surface de la surface diélectrique sur laquelle était apposé le motif conducteur pouvaient aussi représenter une problématique additionnelle dans la réalisation de l'étiquette ; en effet, comme il arrive fréquemment que la couche supérieure du diélectrique principal (par exemple la mousse solide, le carton mousse, le carton ondulé, le carton alvéolaire et/ou le tissu, de préférence la mousse solide) de l'étiquette ne présente pas une bonne planéité et/ou un bon état de surface, l'utilisation d'une pellicule diélectrique additionnelle a permis d'obtenir de meilleurs résultats/performances car, entre autres, elle apportait cette planéité et/ou état de surface recherchés. Ainsi, en ayant des motif(s) constitué(s) d'une couche de matière conductrice apposés sur cette pellicule diélectrique, de meilleures performances ont pu être obtenues. Toute méthode appropriée pourra être utilisée pour caractériser cette planéité et/ou état de surface de la pellicule conductrice. A titre illustratif, et afin d'éviter de devoir entrer dans des considérations de mesures difficiles à mettre en œuvre, les bandes d'étiquettes objets de la présente invention seront avantageusement caractérisées par une épaisseur totale en tout point des résonateurs de l'étiquette (voir en tout point de l'étiquette) qui varie de moins de cent (100) microns, de préférence de moins de cinquante (50) microns, par exemple de moins de quarante (40) microns, de moins de vingt (20) microns, de moins de dix (10) microns, voire par exemple de moins de deux (2) microns. L'apposition des motif(s) constitué(s) d'une couche de matière conductrice directement sur cette pellicule diélectrique pourra être effectuée par toute méthode appropriée comme expliqué ci-après dans la description, par exemple par impression, par exemple par impression jet d'encre. Ensuite, la pellicule diélectrique recouverte des motif(s) constitué(s) d'une couche de matière conductrice pourra être ajoutée au substrat diélectrique principal (la mousse solide, le carton mousse, le carton ondulé, le carton alvéolaire et/ou le tissu, de préférence la mousse solide) dans n'importe quel sens/ordre ; la Demanderesse a même trouvé un avantage à effectuer l'empilement successif (1) substrat diélectrique principal - (2) motif conducteur - (3) pellicule diélectrique - car cet empilement permettait de protéger avantageusement les motifs conducteurs lors de la manipulation et/ou utilisation de l'étiquette puisque ces motifs étaient protégés à la fois d'un côté par le substrat diélectrique principal et de l'autre côté par la pellicule diélectrique.

Dans un mode d'exécution particulier, la pellicule diélectrique est caractérisée par l'une, deux ou plusieurs des caractéristiques suivantes :

- une permittivité relative mesurée à toute fréquence comprise entre 3 et 10 GHz supérieure à celle du substrat diélectrique principal (la mousse solide, le carton mousse, le carton ondulé, le carton alvéolaire et/ou le tissu, de préférence la mousse solide) ; de préférence une permittivité relative supérieure à 1,25 , par exemple supérieure à 2 ; de préférence une permittivité relative inférieure à 3,5 ; et/ou

- une valeur de tangente d'angle de perte mesurée à toute fréquence comprise entre 3 et 10 GHz supérieure à celle du substrat diélectrique principal (la mousse solide, le carton mousse, le carton ondulé, le carton alvéolaire et/ou le tissu, de préférence la mousse solide) ; de préférence une valeur de tangente d'angle de perte inférieure à $2.10^{-2}$ ; et/ou

- une épaisseur au moins dix fois inférieure à celle du substrat diélectrique principal (la mousse solide, le carton mousse, le carton ondulé, le carton alvéolaire et/ou le tissu, de préférence la mousse solide) ; de préférence une épaisseur inférieure à 100 microns, par exemple inférieure à 50 microns ; et/ou

- constituée de matière plastique, par exemple de polyéthylène, de polypropylène ou de polyéthylène téréphtalate.

Dans un mode d'exécution particulier, la constitution chimique principale de la pellicule diélectrique est identique à celle du substrat diélectrique principal. A titre illustratif, si le substrat diélectrique principal est une mousse de polyéthylène téréphtalate, la pellicule diélectrique additionnelle sera aussi à base de polyéthylène téréphtalate.

**Carton**

Comme indiqué précédemment le substrat diélectrique selon la présente invention pourra à titre illustratif être sélectionné parmi le carton ondulé ou le carton alvéolaire. A titre illustratif, le carton ondulé sera sélectionné parmi les cartons à cannelure B (appelée également PC, en général d'épaisseur comprise entre 2,5 et 3,5 mm), les cartons à cannelure E (appelée également micro-cannelure, en général d'épaisseur comprise entre 2 et 1,5 mm) ; les cartons à cannelure F (appelée également Minimicro, en général d'épaisseur d'environ 1,2 mm), les cartons à cannelure G ou N (dite Nano-cannelure) d'épaisseur d'environ 0,8 mm, les cartons à cannelure O, d'épaisseur d'environ 0,5 mm, ou d'un mélange de deux ou plusieurs des cartons pré-cités.

Le carton utilisé dans le cadre de la présente invention aura de préférence une masse volumique apparente inférieure à 250 kg.m$^{-3}$. Il aura par exemple une masse volumique apparente inférieure à 100 kg.m$^{-3}$.

Dans un mode de réalisation particulier selon la présente invention, la bande d'étiquettes RFID sans puce comprenant un substrat diélectrique et un(des) motif(s) constitué(s) d'une couche de matière conductrice est caractérisée en ce que la partie supérieure du substrat diélectrique est en contact avec le(s) motif(s) constitué(s) d'une couche de matière conductrice. En effet, en plus des avantages liés à la surface plane/lisse de la partie supérieure du substrat diélectrique mentionnés ci-dessus, la Demanderesse a également découvert qu'il était préférable d'éviter la présence de tout autre matière entre ces deux couches (substrat/pellicule optionnelle/motifs conducteurs) ; à titre illustratif, aucune colle n'est utilisée entre ces deux parties de l'étiquette.

Couche conductrice

Les bandes d'étiquettes d'identification par fréquence radio sans puce (étiquettes RFID sans puce) selon la présente invention sont donc caractérisés en ce qu'ils comprennent un substrat diélectrique et des motifs constitués d'une couche de matière conductrice. Dans un cas particulier propre à la présente invention, les bandes comprennent également sous le substrat diélectrique une ou plusieurs couches de matière conductrice ; de préférence sous toute la surface du substrat diélectrique. La configuration comportant deux couches conductrices, une sous le substrat diélectrique et celle du(des) motif(s) au-dessus du substrat diélectrique, est un cas particulièrement intéressant pour l'invention (substrat diélectrique en sandwich entre les deux couches conductrices) comme expliqué ci-dessous dans la description des tags avec plan de masse.

Dans un mode d'exécution particulier selon la présente invention, la matière de la couche conductrice constituant le motif comprend (ou de préférence consiste en) un matériau choisi dans le groupe consistant en du graphite, du cuivre, du nickel, de l'argent, de l'aluminium, du platine et/ou leurs mélanges, de préférence du cuivre et/ou de l'argent et/ou de l'aluminium.

Dans un mode d'exécution particulier selon la présente invention, la couche conductrice constituant le motif est caractérisée par une épaisseur de matière conductrice supérieure à 100 nm. On utilisera par exemple une épaisseur de plus de 150 nm. On utilisera par exemple une épaisseur de plus de 200 nm. On utilisera par exemple une épaisseur de plus de 250 nm. On utilisera par exemple une épaisseur de plus de 300 nm. On utilisera par exemple une épaisseur de plus de 400 nm. On utilisera par exemple une épaisseur de plus de 500 nm.

Dans un mode d'exécution particulier selon la présente invention, la couche conductrice constituant le motif est caractérisée par une épaisseur de matière conductrice inférieure à 20 microns. L'épaisseur de matière conductrice sera de préférence inférieure à 10 microns, voire inférieure à 2 microns. On utilisera par exemple une épaisseur de moins de 1,5 microns. On utilisera par exemple une épaisseur de moins de 1 micron.

A titre illustratif, la couche de matière conductrice peut être déposée, de préférence directement sur le substrat diélectrique ou sur la pellicule diélectrique optionnelle, par toute méthode de dépôt appropriée.

Selon la présente invention et dans un mode d'exécution de fabrication particulier, le substrat diélectrique se présente généralement sous une forme d'une bobine de film. Ce film se déplace, en général grâce à un système de transport de film dans une machine d'impression de type bobine-bobine, le long d'un chemin de transport orienté selon un axe longitudinal depuis au moins une bobine de déroulement du film jusqu'à au moins une bobine d'enroulement du film imprimé et/ou personnalisé, et donc recouvert des motifs de matière conductrice conformément à la présente invention.

Nous citerons à titre illustratif comme méthode appropriée pour la fabrication du tag une méthode d'impression d'encre conductrice, en particulier une méthode d'impression numérique d'encre conductrice, plus particulièrement une méthode d'impression numérique d'encre conductrice par jet d'encre à la demande. Cette impression d'encre conductrice par jet d'encre à la demande utilise de préférence des têtes d'impression piézoélectriques.

Nous citerons également à titre illustratif comme méthode alternative appropriée pour la méthode de dépôt d'un motif constitué d'une couche de matière conductrice une méthode qui comprend une étape d'impression numérique d'un premier motif constitué d'un produit d'impression, de préférence diélectrique, tel qu'une encre, un vernis et/ou un toner, suivie d'une étape de dépôt par superposition au premier motif imprimé d'un motif identique constitué d'un film conducteur comprenant une pellicule d'application en contact avec le produit d'impression et une pellicule conductrice. Nous citerons à titre illustratif comme méthode appropriée pour l'étape d'impression du premier motif toute méthode d'impression numérique, plus particulièrement une méthode d'impression numérique par jet à la demande. Cette impression par jet à la demande utilise de préférence des têtes d'impression piézoélectriques. A titre illustratif, l'étape d'application du film sur le premier motif s'effectue dans des conditions de pression et de température entrainant la co-adhésion sélective entre le produit d'impression et la pellicule d'application du film par exemple au moyen d'un ou plusieurs ensembles de rouleaux de pincement et/ou d'un ou plusieurs rouleaux de pression.

Nous citerons également à titre illustratif comme méthode alternative appropriée pour la méthode de dépôt d'un motif constitué d'une couche de matière conductrice une méthode par transfert thermique de la matière conductrice.

Nous citerons également à titre illustratif comme méthode alternative appropriée et préférée pour la réalisation de la bande de tags la méthode d'assemblage successif de pellicules/couches entre elles. Dans cet exemple, la fabrication de la pellicule conductrice constitutive des motifs représentant les résonateurs d'étiquettes pourra soit être réalisée par impression comme décrit ci-dessus, soit par traitement chimique comme décrit ci-dessous.

A titre illustratif et schématique la bande objet de la présente invention pourra avantageusement être réalisée de la manière suivante : on fabrique ou on achète une bobine de film conducteur comprenant une pellicule diélectrique (correspondant à celle décrite comme optionnelle ci-dessus), une pellicule optionnelle de colle, et une pellicule de matière conductrice. Par exemple, on réalise une bobine de couche métal (représentée dans les illustrations ci-dessous par l'exemple de l'aluminium) ALU/PET avec de la colle:

-------- ALU -------- avec une épaisseur illustrative de 5 à 20 $\mu$m (test à 6$\mu$m)

------- Colle -------- (optionnelle)

-------- PET --------

Dans le cas d'étiquettes avec plan de masse, une bobine similaire ou identique pourra avantageusement être utilisé pour la couche conductrice pleine située de l'autre côté de la couche diélectrique principale ; alternativement, on pourra aussi utiliser une bobine de métal.

Puis un vernis protecteur est déposé de façon à former le dessin du tag sur la face aluminium (le vernis protège uniquement l'aluminium utile pour le tag).

Ensuite cette couche avec le vernis sera avantageusement plongée dans un bain chimique (par exemple des solutions à base de soude caustique ou de potasse caustique) qui enlèvera l'aluminium qui n'est pas protégé par le vernis.

Ensuite il faudra assembler les couches. Dans l'exemple ci-dessous, la couche de substrat diélectrique est représentée par la mousse, et on a illustré le cas « avec plan de masse ». Cet assemblage s'effectuera donc de manière illustrative par procédé bobine à bobine comme préalablement indiqué.

Une illustration des couches correspondantes successives est indiquée ci-dessous :

----- VERNIS ------ représentant le tag

-------- ALU -------- représentant le tag avec une épaisseur de 5 à 20 $\mu$m

------- Colle -------- (optionnelle)

-------- PET --------

------- Colle -------- (optionnelle)

---- MOUSSE ----

------- Colle -------- (optionnelle)

-------- PET -------- (optionnel)

-------- ALU -------- (représentant le plan de masse)

Ainsi, et ceci constitue un mode de réalisation préféré selon la présente invention, la bande de l'étiquette RFID sans puce sera constituée successivement de bas en haut

- d'une couche conductrice optionnelle mais préférée,
- surmontée d'une pellicule diélectrique optionnelle mais préférée,
- surmontée du substrat diélectrique principal (par exemple la mousse solide, le carton mousse, le carton ondulé, le carton alvéolaire et/ou le tissu, de préférence la mousse solide),
- surmontée d'une pellicule diélectrique sur laquelle est(sont) apposée(s) le(s) motif(s) constitué(s) d'une couche de matière conductrice, les dits motifs conducteurs pouvant se trouver soit sur la partie supérieure de l'étiquette, soit avantageusement entre le substrat diélectrique principal et la pellicule diélectrique.

La présente invention concerne donc une bande de tags qui possèdent des caractéristiques de résonance. Dans un mode d'exécution particulier selon la présente invention, le tag est constitué des substrats diélectriques et des couches conductrices elles que décrites ci-dessus.

Tag

A titre illustratif, le tag RFID sans puce (personnalisé) selon la présente invention possède les caractéristiques suivantes :

∘ Un motif conducteur ou un ensemble de motifs conducteur caractérisant sa géométrie, avec de préférence au moins un ou plusieurs ou tous les motifs asymétriques,
∘ Un identifiant qui comprend au moins une fréquence de résonance fr et, de préférence, au moins un facteur de qualité Q,
∘ Résonant dans une bande de fréquences ultra large (ULB) caractérisée par une bande passante supérieure ou égale à 500 MHz, de préférence comprise entre 3,1 et 10,6 GHz,
∘ Avec ou sans plan de masse, et
∘ Polarisant ou de préférence Dépolarisant.

**Tag - Géométrie**

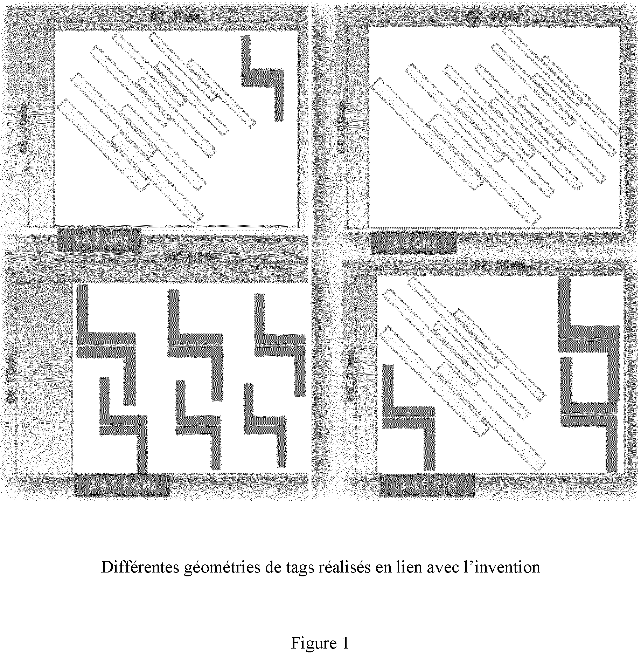

A titre d'exemple, la Figure 1 montre différentes géométries de tags avec plan de masse réalisés spécifiquement dans le cadre de la présente invention. Cette Figure 1 illustre quatre tags, chacun ayant six résonateurs. Deux familles de résonateurs (forme en double L - en gris foncé - et forme en double trait parallèle incliné à 45° - en gris clair) sont utilisées pour optimiser les performances du tag. La bande de fréquence dans laquelle se situent les fréquences de résonance de chacun des tags est indiquée en bas à gauche de chaque tag différentes géométries de tags.

**Tag - Identifiant**

Le tag selon la présente invention sera de préférence caractérisé par un identifiant qui comprend au moins une fréquence de résonance *fr* et au moins un facteur de qualité Q.

**Tag Résonant**

Le tag selon la présente invention est donc résonant dans une bande de fréquences ultra large (ULB) caractérisée par une bande passante supérieure ou égale à 500 MHz, de préférence comprise entre 3,1 et 10,6 GHz.

**Tag Passif**

Comme déjà expliqué dans la partie introductive, notre type de dispositif d'identification par fréquence radio sans puce ne nécessite donc ni circuit intégré, ni composants électroniques discrets, tels que par exemple un transistor et/ou une bobine et/ou une capacité et/ou une antenne. Ce type de dispositif est donc caractérisé par un comportement passif car il ne devra pas intégrer de source d'énergie locale (telle qu'une batterie).

Le tag pourra donc facilement caractériser un emballage, un document, une étiquette, notamment un document de sécurité ainsi qu'éventuellement tout objet et/ou être vivant sur lequel le marquage de l'identification par RFID sans puce peut être réalisé ou sur lequel un support du marquage peut être rapporté.

**Tag avec ou sans plan de masse**

Le tag selon la présente invention peut être caractérisé en ce qu'il possède ou non un plan de masse. Dans sa plus simple expression, un tag avec plan de masse selon la présente invention se définit comme une structure comportant un substrat diélectrique plan d'une épaisseur généralement inférieure à 3 mm et généralement supérieure à 100 µm pris en sandwich entre deux couches métalliques (la couche du motif conducteur surmontant le substrat diélectrique et l'autre couche conductrice située sous le substrat diélectrique).

Ainsi, la bande objet de la présente invention sera avantageusement caractérisée en ce qu'elle comprend une couche conductrice sur la face de la couche de substrat diélectrique située à l'opposé de celle comprenant les motifs constitués d'une couche de matière conductrice.

A titre illustratif, l'épaisseur de la couche conductrice (située sous le substrat diélectrique lorsque les motifs constitués d'une couche de matière conductrice sont situés au-dessus dudit substrat diélectrique) sera avantageusement sélectionnée parmi les épaisseurs suivantes.

Dans un mode d'exécution particulier selon la présente invention, la couche conductrice située sous le substrat est caractérisée par une épaisseur de matière conductrice supérieure à 100 nm. On utilisera par exemple une épaisseur de plus de 150 nm. On utilisera par exemple une épaisseur de plus de 200 nm. On utilisera par exemple une épaisseur de plus de 250 nm. On utilisera par exemple une épaisseur de plus de 300 nm. On utilisera par exemple une épaisseur de plus de 400 nm. On utilisera par exemple une épaisseur de plus de 500 nm.

Dans un mode d'exécution particulier selon la présente invention, la couche conductrice située sous le substrat est caractérisée par une épaisseur de matière conductrice inférieure à 20 microns, par exemple inférieure à 10 microns, voire inférieure à 2 microns. On utilisera par exemple une épaisseur de moins de 1,5 microns. On utilisera par exemple une épaisseur de moins de 1 micron.

Dans un mode d'exécution particulier selon la présente invention, le total des couches (motif conducteur - diélectrique - couche conductrice) pourra par exemple avoir une épaisseur de 0,1 à 3mm.

Bien qu'on parle de tag avec ou sans plan de masse, dans la technique, le terme « plan de masse » est bien souvent associé à la couche métallique (située sous le substrat) dont la surface correspond de préférence totalement à celle du substrat.

Dans un mode d'exécution particulier selon la présente invention, la matière de la couche conductrice constituant le plan de masse comprend (ou de préférence consiste en) un matériau choisi dans le groupe consistant en du graphite, du cuivre, du nickel, de l'argent, de l'aluminium, du platine et/ou leurs mélanges, de préférence du cuivre et/ou de l'argent et/ou de l'aluminium. Dans un mode d'exécution particulier selon la présente invention, la matière de la couche conductrice constituant le plan de masse est différente ou identique à celle du motif conducteur, de préférence identique.

La seconde couche métallique (le(s) motif(s)) va-elle être façonnée de manière à présenter une forme géométrique particulière correspondant aux motifs du tag (à l'image de motifs présentés sur la figure 1). Un tag avec plan de masse est donc une structure comportant deux couches métalliques alors que son analogue sans plan de masse va lui comporter une seule couche à savoir celle où le motif du tag est réalisé. Un tag avec plan de masse a l'avantage, une fois positionné côté plan de masse sur un objet, d'isoler d'un point de vue électromagnétique le tag de l'objet. Dans ce cas, l'influence de l'objet sur le tag est moindre par rapport à un tag sans plan de masse.

On note également qu'un tag avec plan de masse est un cas particulier d'un tag comportant deux couches métallisées où le substrat est pris en sandwich. En effet, dans cette configuration préférée, une des deux couches est de préférence entièrement métallisée. Toutefois des configurations intermédiaires de tag sont possibles, on citera par exemple un tag avec plans de masse, où coté plan de masse des ouvertures (retraits de zones métalliques) sont réalisées pour permettre d'atteindre un comportement particulier. Ceci peut par exemple permettre de réaliser de nouvelles résonnances, ou de modifier celles déjà présentes sur la première couche conductrice. Elles peuvent également favoriser l'isolement des différents résonateurs de la seconde couche métallique, améliorant ainsi le découplage de ces résonances et donc ayant un effet qui peut permettre d'améliorer les performances de lecture du tag.

La couche de matière conductrice du plan de masse peut être déposée, de préférence directement sur le substrat diélectrique, par toute méthode de dépôt appropriée. On répétera déjà titre illustratif les méthodes de dépôt mentionnés ci-dessus pour le dépôt des motifs conducteurs.

On note également qu'un tag chipless comportant deux couches conductrices avec au milieu la couche diélectrique, pour des questions de coût peut également être réalisé en entourant le substrat des couches conductrices, par exemple par pliage. Dans ce cas, la couche conductrice peut avoir une surface au moins deux fois supérieure à celle du substrat, typiquement une largeur au moins deux fois supérieurs avec la même longueur. Une fois cette surface comportant les motifs conducteurs et ou le plan de masse fabriquée, elle sera avantageusement reportée en une fois autour de la couche diélectrique. Ceci est possible en la pliant tout autour. La seule différence par rapport à l'approche traditionnelle (report une à une des deux couches métallisées sur chacune des faces du diélectrique) est la présence de la couche métallisée sur un ou plusieurs des flancs du diélectrique. Si cette partie n'est pas métallisée, aucune différence significative n'est présente par rapport à l'approche plus traditionnelle. Toutefois la possibilité de métalliser cette partie (un ou plusieurs flancs du diélectrique) va permettre de réaliser des structures plus complexes, qui à l'image d'une cavité résonante à parois métallique, permettra d'améliorer le facteur de qualité. Ainsi un homme de l'art est en mesure de tirer profit de cette structure qui par ailleurs est généralement plus simple à réaliser car nécessitant moins d'étapes de fabrication. En effet, cette dernière approche réduit le nombre d'étapes technologiques : impression d'un seul support conducteurs, et collage d'un seul support également.

Dans un mode d'application particulier selon la présente invention, on sélectionnera le substrat diélectrique (avec ou sans plan de masse) parmi les matériaux commerciaux utilisés en matière d'isolation thermique ou d'isolation acoustique dont les caractéristiques correspondent aux caractéristiques de la présente invention (et/ou à celles revendiquées dans la présente invention) ; et on apposera directement sur ces matériaux commerciaux les motifs conducteurs désirés.

La présente invention s'applique donc de manière avantageuse aussi bien aux tags sans plan de masse qu'avec plan de masse.

**Tag dépolarisant**

Le tag selon la présente invention sera de préférence caractérisé par le fait qu'il est polarisant ou de préférence dépolarisant. Un tag dépolarisant est un tag capable d'émettre une onde avec une polarisation orientée perpendiculairement à celle incidente (on parle alors de réflexion en polarisation croisée ou cross polarisation en anglais).

Dans un mode d'exécution particulier selon la présente invention, la bande d'étiquettes RFID sans puce a un rapport entre la surface supérieure totale du substrat diélectrique et la surface supérieure du substrat diélectrique recouverte de motif(s) constitué(s) d'une couche de matière conductrice supérieur à 2.

Dans un mode d'exécution particulier selon la présente invention, la bande d'étiquettes RFID sans puce avec plan de masse a un rapport entre la surface inférieure du substrat diélectrique recouverte de la couche de matière conductrice et la surface inférieure totale du substrat diélectrique supérieur à 0,9.

Lecteur

A titre illustratif, dans le cadre de la présente invention, le lecteur est un lecteur émetteur-récepteur d'ondes électromagnétiques ; le principe de fonctionnement du dit lecteur repose sur l'émission d'un signal électromagnétique en direction des étiquettes d'identification qui vont renvoyer le dit signal en fonction de leur géométrie (et par exemple de leurs caractéristiques de résonances propres) et sur la capture par le lecteur du dit signal réfléchi - ainsi, le traitement du signal reçu (notamment à travers une étape de décodage) permettra de remonter à l'information contenue dans l'étiquette / le tag.

Ainsi, de manière générale, les étiquettes d'identification par fréquence radio sans puce selon la présente invention font partie d'un système RFID qui comprend également un ou plusieurs lecteurs RFID qui sont eux-mêmes connectés on non à des ordinateurs de supervision ou à une carte électronique qui réalise un traitement des informations reçues et qui peuvent par exemple faire le lien avec des bases de données existantes. Ces lecteurs permettent donc d'identifier des objets grâce aux tags RFID qui y sont apposés, les dits tags RFID sans puce étant assimilables à une cible radar statique avec une signature électromagnétique spécifique. Ainsi, dans un mode d'exécution particulier de la présente invention, les lecteurs RFID sont donc assimilables à un radar en termes de fonctionnement, par exemple un radar aérien détectant la signature des avions à un rapport d'échelle et de puissance près. A titre illustratif, les tags RFID sans puce peuvent être vus comme des cibles radar possédant une signature temporelle ou fréquentielle particulière. Tout type de radar approprié à la réception/identification du signal retro-émis par le tag RFID pourra avantageusement être utilisé dans le cadre de l'invention ; à titre illustratif et non limitatif, nous citerons le radar impulsionnel.

Les capacités de codage obtenues au moyen des étiquettes d'identification par fréquence radio sans puce selon la présente invention répondent aux normes en vigueur car les étiquettes obtenues permettent d'avoir au moins 40 bits d'informations ce qui correspond au codes à barre de type EAN13. A titre illustratif, des valeurs de plus de 40 bits pour un format de carte de crédit [soit 40 / (85,60 × 53,98 mm)= 40 /46 bits/cm²] ont été obtenues ; ainsi, dans un mode d'exécution particulier selon la présente invention, les étiquettes de la bande objet de la présente invention sont caractérisés par une valeur de capacité de codage supérieure à 0,85 bits/cm², par exemple supérieure à 1 bits/cm², supérieure à 2 bits/cm², voire supérieure à 5 bits/cm².

Dans une variante de réalisation de la présente invention, le tag de la bande objet de la présente invention pourra être apposé sur tout type d'objet et/ou d'êtres vivants (par exemple un animal ou un humain). Dans une variante de réalisation de la présente invention, l'objet sur lequel le tag sera apposé (de préférence collé) peut être sélectionné parmi un grand nombre de matières dont nous citerons à titre d'exemples non limitatifs le métal, le papier, le tissu, le plastique, par exemple une résine copolymère méthacrylique, du polyester, du polycarbonate, du polyéthylène, du polypropylène, et/ou du chlorure de polyvinyle, ou même les matériaux de type cellulosique tels que, par exemple, le bois, le contreplaqué ou les matériaux cristallins tels que le verre ou les céramique, par exemple les matériaux complexes comprenant un ou plusieurs de ces composants comme par exemple les briques de lait.

Dans une variante de réalisation de la présente invention et à condition que le substrat diélectrique du tag de la bande objet de la présente invention réponde aux exigences d'une ou plusieurs des exigences susmentionnées, ledit substrat diélectrique pourra être sélectionné parmi un grand nombre de matières dont nous citerons à titre d'exemples non limitatifs le papier, le tissu, le plastique, par exemple une résine copolymère méthacrylique, du polyester, du polycarbonate, du polyéthylène, du polypropylène, et/ou du chlorure de polyvinyle, ou même les matériaux de type cellulosique tels que, par exemple, le bois, le contreplaqué ou les matériaux cristallins tels que le verre ou les céramique, par exemple les matériaux complexes comprenant un ou plusieurs de ces composants comme par exemple les briques de lait.

La présente demande décrit diverses caractéristiques techniques et avantages en référence aux Figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1.  Bande d'étiquettes d'identification par fréquence radio sans puce, ladite bande comprenant une couche de substrat diélectrique et des motifs constitués d'une couche de matière conductrice représentant les résonateurs d'étiquettes, ladite bande a des dimensions de longueur L, de largeur 1 et d'épaisseur Ep et est **caractérisée en ce qu'**elle comprend des saignées en forme de V de profondeur Pr de la bande et orientées dans la direction de la largeur de la bande.

**2.** Bande d'étiquettes d'identification par fréquence radio sans puce selon la revendication 1 **caractérisée en ce que** la profondeur des saignées est telle que Pr > 1% de l'épaisseur Ep de la bande, par exemple Pr > 5% de l'épaisseur Ep de la bande.

**3.** Bande d'étiquettes d'identification par fréquence radio sans puce selon l'une quelconque des revendications précédentes, **caractérisée en ce que** la profondeur Pr des saignées est telle que Pr < 90% de l'épaisseur Ep de la bande, par exemple Pr < 50% de l'épaisseur Ep de la bande.

**4.** Bande d'étiquettes d'identification par fréquence radio sans puce selon l'une quelconque des revendications précédentes, **caractérisée en ce que** la longueur des saignées est supérieure à 80% de la largeur l de la bande, par exemple supérieure à 90% de la largeur l de la bande, de préférence identique à la largeur l de la bande.

**5.** Bande d'étiquettes d'identification par fréquence radio sans puce selon l'une quelconque des revendications précédentes, **caractérisée en ce que** les saignées sont sur les deux faces de la bande.

**6.** Bobine de bande d'étiquettes d'identification par fréquence radio sans puce, ladite bande étant **caractérisée par** l'une quelconque des revendications précédentes.

**7.** Bobine selon la revendication 6 **caractérisée en ce qu'**elle comprend un élément support cylindrique central de l'enroulement de la bande, par exemple un mandrin.

**8.** Bobine selon la revendication 7 **caractérisée en ce que** le diamètre de l'élément support cylindrique central « Dia » est compris entre 25 mm et 305 mm.

**9.** Bobine selon l'une quelconque des revendications 7 et 8 **caractérisée en ce que** le diamètre de la bobine « Dréel » est compris entre 50 mm et 1000 mm.

**10.** Bobine selon l'une quelconque des revendications 8 et 9 **caractérisée en ce que** l'espacement entre deux saignées consécutives « Esp » statisfait

$$((Esp/2)^2+(Dia/2)^2)^{1/2} - (Dia/2) < 2 \text{ mm}$$

Et/ou

$$((Esp/2)^2+(Dréel/2)^2)^{1/2} - (Dréel/2) < 2 \text{ mm}$$

**11.** Bobine selon l'une quelconque des revendications 8 et 9 **caractérisée en ce que** l'espacement entre deux saignées consécutives « Esp » statisfait

$$((Esp/2)^2+(Dia/2)^2)^{1/2} - (Dia/2) < 1 \text{ mm}$$

Et/ou

$$((Esp/2)^2+(Dréel/2)^2)^{1/2} - (Dréel/2) < 1 \text{ mm}$$

**12.** Bande ou bobine selon l'une quelconque des revendications précédentes **caractérisée en ce que** la distance entre les saignées et les résonateurs et/ou motifs de résonateurs est supérieure à 1 mm.

**13.** Bande ou bobine selon la revendication précédente **caractérisée en ce que** la distance entre les saignées et les résonateurs et/ou motifs de résonateurs est supérieure à 2 mm.

**14.** Bande ou bobine selon l'une quelconque des revendications précédentes **caractérisée en ce que** l'épaisseur du substrat diélectrique est supérieure à 0,1 mm.

**15.** Bande ou bobine selon l'une quelconque des revendications précédentes **caractérisée en ce que** l'épaisseur du substrat diélectrique est inférieure à 5 mm.

16. Bande ou bobine selon l'une quelconque des revendications précédentes **caractérisée en ce que** le substrat diélectrique est sélectionné parmi les substrats diélectriques répondant à au moins une, deux ou les trois propriétés suivantes :

- une masse volumique apparente inférieure à 250 kg.m$^{-3}$ ;
- une permittivité relative inférieure à 1,25 et supérieure 1,01 ;
- une valeur de tangente d'angle de perte inférieure à 10$^{-3}$.

17. Bande ou bobine selon la revendication précédente **caractérisée en ce que** le substrat diélectrique a une masse volumique apparente comprise entre 25 et 75 kg.m$^{-3}$ ; une permittivité relative comprise entre 1,05 et 1,09 ; et une valeur de tangente d'angle de perte tan $\delta$ comprise entre 10$^{-5}$ et 2.10$^{-4}$ à une fréquence de 3.9 GHz.

18. Bande ou bobine selon l'une quelconque des revendications précédentes **caractérisée en ce que** l'épaisseur de la couche conductrice constituant le motif est inférieur à 10 microns.

19. Bande ou bobine selon l'une quelconque des revendications précédentes **caractérisée en ce que** la bande comprend une couche conductrice sur la face de la couche de substrat diélectrique située à l'opposé de celle comprenant les motifs constitués d'une couche de matière conductrice.

20. Procédé de préparation de la bande d'étiquettes d'identification par fréquence radio sans puce et/ou de sa bobine correspondante selon l'une quelconque des revendications précédentes au moyen d'un procédé rouleau à rouleau qui intègre un poste de découpe permettant de réaliser les saignées.

**Patentansprüche**

1. Chiploser Funkfrequenzidentifikations-Labelstreifen, wobei der Streifen eine dielektrische Substratschicht und strukturierte elektrisch leitfähige Materialschichten umfasst, die Labelresonatoren darstellen, wobei der Streifen Abmessungen einer Länge L, Breite l und Dicke Ep aufweist und **dadurch gekennzeichnet ist, dass** er V-förmige Nuten einer Tiefe Pr des Streifens umfasst und in die Richtung der Breite des Streifens ausgerichtet ist.

2. Chiploser Funkfrequenzidentifikations-Labelstreifen nach Anspruch 1, **dadurch gekennzeichnet, dass** die Tiefe der Nuten derart ist, dass Pr > 1 % der Dicke Ep des Streifens ist, zum Beispiel Pr > 5 % der Dicke Ep des Streifens.

3. Chiploser Funkfrequenzidentifikations-Labelstreifen nach einem der vorhergehenden Ansprüche, **dadurch gekennzeichnet, dass** die Tiefe Pr der Nuten derart ist, dass Pr < 90 % der Dicke Ep des Streifens ist, zum Beispiel Pr < 50 % der Dicke Ep des Streifens.

4. Chiploser Funkfrequenzidentifikations-Labelstreifen nach einem der vorhergehenden Ansprüche, **dadurch gekennzeichnet, dass** die Länge der Nuten mehr als 80 % der Breite l des Streifens ist, zum Beispiel mehr als 90 % der Breite l des Streifens, vorzugsweise gleich der Breite l des Streifens.

5. Chiploser Funkfrequenzidentifikations-Labelstreifen nach einem der vorhergehenden Ansprüche, **dadurch gekennzeichnet, dass** die Nuten auf beiden Seiten des Streifens sind.

6. Rolle chiploser Funkfrequenz-Labelstreifen, wobei der Streifen durch einen der vorhergehenden Ansprüche gekennzeichnet ist.

7. Rolle nach Anspruch 6, **dadurch gekennzeichnet, dass** sie ein zentrales zylindrisches Stützelement zum Aufwickeln des Streifens, zum Beispiel einen Dorn, umfasst.

8. Rolle nach Anspruch 7, **dadurch gekennzeichnet, dass** der Durchmesser des zentralen zylindrischen Stützelements "Dia" zwischen 25 mm und 305 mm ist.

9. Rolle nach einem der Ansprüche 7 und 8, **dadurch gekennzeichnet, dass** der Durchmesser der Rolle "Dreal" zwischen 50 mm und 1000 mm ist.

**10.** Rolle nach einem der Ansprüche 8 und 9, **dadurch gekennzeichnet, dass** der Abstand zwischen zwei aufeinanderfolgenden Nuten "Esp" Folgendes erfüllt

$$((Esp/2)^2 + (Dia/2)^2)^{1/2} - (Dia/2) < 2 \text{ mm.}$$

und/oder

$$((Esp/2)^2 + (Dreal/2)^2)^{1/2} - (Dreal/2) < 2 \text{ mm.}$$

**11.** Rolle nach einem der Ansprüche 8 und 9, **dadurch gekennzeichnet, dass** der Abstand zwischen zwei aufeinanderfolgenden Nuten "Esp" Folgendes erfüllt

$$((Esp/2)^2 + (Dia/2)^2)^{1/2} - (Dia/2) < 1 \text{ mm}$$

und/oder

$$((Esp/2)^2 + (Dreal/2)^2)^{1/2} - (Dreal/2) < 1 \text{ mm.}$$

**12.** Streifen oder Rolle nach einem der vorhergehenden Ansprüche, **dadurch gekennzeichnet, dass** der Abstand zwischen den Nuten und den Resonatoren und/oder Resonatormustern größer als 1 mm ist.

**13.** Streifen oder Rolle nach dem vorhergehenden Anspruch, **dadurch gekennzeichnet, dass** der Abstand zwischen den Nuten und den Resonatoren und/oder Resonatormustern größer als 2 mm ist.

**14.** Streifen oder Rolle nach einem der vorhergehenden Ansprüche, **dadurch gekennzeichnet, dass** die Dicke des dielektrischen Substrats größer als 0,1 mm ist.

**15.** Streifen oder Rolle nach einem der vorhergehenden Ansprüche, **dadurch gekennzeichnet, dass** die Dicke des dielektrischen Substrats kleiner als 5 mm ist.

**16.** Streifen oder Rolle nach einem der vorhergehenden Ansprüche, **dadurch gekennzeichnet, dass** das dielektrische Substrat ausgewählt ist aus dielektrischen Substraten, die mindestens eine, zwei oder alle drei der folgenden Eigenschaften aufweisen:

- eine scheinbare Dichte von weniger als 250 kg.m$^{-3}$ ;
- eine relative Permittivität von weniger als 1,25 und mehr als 1,01;
- einen Verlustfaktor von weniger als 10$^{-3}$.

**17.** Streifen oder Rolle nach dem vorhergehenden Anspruch, **dadurch gekennzeichnet, dass** das dielektrische Substrat eine scheinbare Dichte zwischen 25 und 75 kg.m$^{-3}$, eine relative Permittivität zwischen 1,05 und 1,09 und einen Verlustfaktor tan $\delta$ zwischen 10$^{-5}$ und 2,10$^{-4}$ bei einer Frequenz von 3,9 GHz aufweist.

**18.** Streifen oder Rolle nach einem der vorhergehenden Ansprüche, **dadurch gekennzeichnet, dass** die Dicke der elektrisch leitfähigen Schicht, aus der das Muster besteht, weniger als 10 Mikrometer ist.

**19.** Streifen oder Rolle nach einem der vorhergehenden Ansprüche, **dadurch gekennzeichnet, dass** der Streifen eine elektrisch leitfähige Schicht auf der Seite der dielektrischen Substratschicht umfasst, die der gegenüberliegt, die Muster, die aus einer Schicht aus leitfähigem Material bestehen, umfasst.

**20.** Verfahren zur Herstellung des Streifens chiploser Funkfrequenz-Labelstreifen und/oder der entsprechenden Rolle nach einem der vorhergehenden Ansprüche mittels eines Rolle-zu-Rolle-Vorgangs, der eine Schneidestation zum Herstellen der Nuten integriert.

**Claims**

1. A chipless radio frequency identification label strip, said strip comprising a dielectric substrate layer and patterned conductive material layers representing label resonators, said strip has dimensions of length L, width l and thickness Ep and is **characterised in that** it comprises V-shaped grooves of depth Pr of the strip and oriented in the direction of the width of the strip.

2. Chipless radio frequency identification label strip according to claim 1, **characterised in that** the depth of the grooves is such that Pr > 1% of the thickness Ep of the strip, for example Pr > 5% of the thickness Ep of the strip.

3. Chipless radio frequency identification label strip according to any one of the preceding claims, **characterised in that** the depth Pr of the grooves is such that Pr < 90% of the thickness Ep of the strip, for example Pr < 50% of the thickness Ep of the strip.

4. Chipless radio frequency identification label strip according to any one of the preceding claims, **characterised in that** the length of the grooves is greater than 80% of the width l of the strip, for example greater than 90% of the width l of the strip, preferably identical to the width l of the strip.

5. Chipless radio frequency identification label strip according to any one of the preceding claims, **characterised in that** the grooves are on both sides of the strip.

6. Reel of chipless radio frequency identification label strip, said strip being **characterised by** any one of the preceding claims.

7. Reel according to claim 6, **characterised in that** it comprises a central cylindrical support element for winding the strip, for example a mandrel.

8. Reel according to claim 7, **characterised in that** the diameter of the central cylindrical support element "Dia" is between 25 mm and 305 mm.

9. Reel according to any one of claims 7 and 8, **characterised in that** the diameter of the reel "Dreal" is between 50 mm and 1000 mm.

10. Reel according to any one of claims 8 and 9, **characterised in that** the spacing between two consecutive grooves "Esp" satisfies

$$((Esp/2)^2 + (Dia/2)^2)^{1/2} - (Dia/2) < 2 \text{ mm}$$

And/or

$$((Esp/2)^2 + (Dreal/2)^2)^{1/2} - (Dreal/2) < 2 \text{ mm}$$

11. Reel according to any one of claims 8 and 9, **characterised in that** the spacing between two consecutive grooves "Esp" satisfies

$$((Esp/2)^2 + (Dia/2)^2)^{1/2} - (Dia/2) < 1 \text{ mm}$$

And/or

$$((Esp/2)^2 + (Dreal/2)^2)^{1/2} - (Dreal/2) < 1 \text{ mm}$$

12. Strip or reel according to any one of the preceding claims, **characterised in that** the distance between the grooves and the resonators and/or resonator patterns is greater than 1 mm.

13. Strip or reel according to the preceding claim, **characterised in that** the distance between the grooves and the resonators and/or resonator patterns is greater than 2 mm.

14. Strip or reel according to any one of the preceding claims, **characterised in that** the thickness of the dielectric substrate is greater than 0.1 mm.

15. Strip or reel according to any one of the preceding claims, **characterised in that** the thickness of the dielectric substrate is less than 5 mm.

16. Strip or reel according to any one of the preceding claims, **characterised in that** the dielectric substrate is selected from dielectric substrates having at least one, two or all three of the following properties:

   • an apparent density of less than 250 $kg.m^{-3}$ ;
   • a relative permittivity of less than 1.25 and greater than 1.01;
   • a loss tangent value of less than $10^{-3}$.

17. Strip or reel according to the previous claim, **characterised in that** the dielectric substrate has an apparent density between 25 and 75 $kg.m^{-3}$ ; a relative permittivity between 1.05 and 1.09; and a loss tangent value tan $\delta$ between $10^{-5}$ and $2.10^{-4}$ at a frequency of 3.9 GHz.

18. Strip or reel according to any one of the preceding claims, **characterised in that** the thickness of the conductive layer constituting the pattern is less than 10 microns.

19. Strip or reel according to any one of the preceding claims, **characterised in that** the strip comprises a conductive layer on the face of the dielectric substrate layer opposite to that comprising the patterns consisting of a layer of conductive material.

20. Method for preparing the strip of chipless radio frequency identification labels and/or its corresponding reel according to any one of the preceding claims by means of a roll-to-roll process that incorporates a cutting station for making the grooves.

Différentes géométries de tags réalisés en lien avec l'invention

Figure 1

(a)

(b)

(c)

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2956232 B1
- US 8556184 B2
- WO 2021165422 A1
- ZA 200607984 A
- US 2006289979 A

**Littérature non-brevet citée dans la description**

- **VENA, ARNAUD** ; **PERRET, ETIENNE** ; **TEDJINI, SMAIL**. Chipless RFID based on RF encoding particle: realization, coding and reading system. Elsevier, 02 August 2016